# EUROPÄISCHE PATENTANMELDUNG

(11) **EP 2 866 331 A1**
(43) Veröffentlichungstag der Anmeldung: **29.04.2015**
(21) Anmeldenummer: 13190450.0
(22) Anmeldetag: 28.10.2013
(51) Int. Cl.: H02K 9/00

(54) **Verfahren zum Betreiben eines einen geschlossenen Kühlkreislauf aufweisenden Kühlsystems zur Kühlung einer rotierenden elektrischen Maschine**

(71) Anmelder: Siemens Aktiengesellschaft, 80333 München (DE)
(72) Erfinder: Lehmann, Christoph, 47506 Neukirchen-Vluyn (DE); Grau Sorarrain, Esteban, 40215 Düsseldorf (DE); Jäkel, Christian, 45468 Mülheim an der Ruhr (DE); Koebe, Mario, 45478 Mülheim an der Ruhr (DE); Kowalski, Matthias, 45470 Mülheim an der Ruhr (DE); Mashkin, Andrey, 50672 Köln (DE); Plotnikova, Olga, 42369 Wuppertal (DE); Schild, Carolin, 45478 Mülheim an der Ruhr (DE)

(57) **Zusammenfassung**

Ein Verfahren zum Betreiben eines einen geschlossenen Kühlkreislauf aufweisenden Kühlsystems zur Kühlung einer rotierenden elektrischen Maschine, insbesondere eines Generators, wobei in dem Kühlkreislauf ein Kühlgas zirkuliert, wobei ein Abschnitt des Kühlkreislaufs durch ein Gehäuse der rotierenden elektrischen Maschine gebildet wird, und wobei ein in dem Kühlgas herrschender Druck, eine Zusammensetzung des Kühlgases und/oder eine Temperatur des Kühlgases in Abhängigkeit von einer Temperatur eines von der rotierenden elektrischen Maschine abgeführten Warmgases, von einer Temperatur von zumindest einer Komponente der rotierenden elektrischen Maschine und/oder von einer jeweilig von der rotierenden elektrischen Maschine abgegebenen Leistung variiert wird.

## Beschreibung

Die Erfindung betrifft ein Verfahren zum Betreiben eines einen geschlossenen Kühlkreislauf aufweisenden Kühlsystems zur Kühlung einer rotierenden elektrischen Maschine, insbesondere eines Generators, wobei in dem Kühlkreislauf ein Kühlgas zirkuliert und ein Abschnitt des Kühlkreislaufs durch ein Gehäuse der rotierenden elektrischen Maschine gebildet wird.

Des Weiteren betrifft die Erfindung eine Anordnung zum Variieren eines in einem in einem geschlossenen Kühlkreislauf eines Kühlsystems zur Kühlung einer rotierenden elektrischen Maschine , insbesondere eines Generators, zirkulierenden Kühlgas herrschenden Drucks, wobei ein Abschnitt des Kühlkreislaufs durch ein Gehäuse der rotierenden elektrischen Maschine gebildet ist.

Ferner umfasst die Erfindung ein System zum Kühlen einer rotierenden elektrischen Maschine, insbesondere eines Generators, aufweisend einen geschlossenen Kühlkreislauf, von dem ein Abschnitt durch ein Gehäuse der rotierenden elektrischen Maschine gebildet ist, und ein in dem Kühlkreislauf zirkulierendes Kühlgas.

Während eines Betriebs einer rotierenden elektrischen Maschine wird durch Umwandlung von mechanischer Energie in elektrische Energie, und umgekehrt, mittels der rotierenden elektrischen Maschine zwangsläufig Wärme in der rotierenden elektrischen Maschine erzeugt. Diese Erzeugung von Verlustwärme wächst mit einer anwachsenden Auslastung einer rotierenden elektrischen Maschine an.

Für einen sicheren und dauerhaften Betrieb einer rotierenden elektrischen Maschine muss die Verlustwärme aus der rotierenden elektrischen Maschine abgeführt werden. Je mehr Wärme aus einer rotierenden elektrischen Maschine abgeführt wird, desto höher kann die rotierende elektrische Maschine ausgelastet werden, was mit einer entsprechenden Leistungssteigerung einhergeht.

Die Verlustwärmeabführung ist insbesondere deshalb erforderlich, da an einem Stator und/oder einem Rotor einer rotierenden elektrischen Maschine elektrische Isolierungen vorhanden sind, welche ab Erreichen einer bestimmten Temperatur beeinträchtigt werden würden, was im schlimmsten Fall insbesondere zu schädigenden elektrischen Kurzschlüssen führen könnte.

Zudem muss bei einer Verlustwärmabführung sichergestellt werden, dass bei maximaler Last die am höchsten belasteten Bauteile einer rotierenden elektrischen Maschine ausreichend gekühlt werden. Herkömmlich werden die Bauteile einer rotierenden elektrischen Maschine unabhängig von der an der rotierenden elektrischen Maschine anliegenden Last annähernd gleichstark gekühlt. Dies hat jedoch zur Folge, dass die Temperaturen der Bauteile einer rotierenden elektrischen Maschine im Betrieb der rotierenden elektrischen Maschine sehr unterschiedlich sein können. Hinzukommt, dass die zu kühlenden Bauteile einer rotierenden elektrischen Maschine meist aus unterschiedlichen Werkstoffen mit unterschiedlichen Wärmeausdehnungskoeffizienten hergestellt sind. Die im Betrieb einer rotierenden elektrischen Maschine auftretenden Schwankungen der einzelnen Bauteiltemperaturen können daher zu Relativbewegungen und Reibung zwischen einzelnen Bauteilen sowie zu unerwünschten thermomechanischen Spannungen in Bauteilen führen, was die Lebensdauer der Bauteile bzw. einer daraus aufgebauten rotierenden elektrischen Maschine deutlich verkürzt. Derartige Beeinträchtigungen können insbesondere an Wickelköpfen eines Ständers einer rotierenden elektrischen Maschine auftreten, was zu einer Lockerung der Wickelköpfe führen kann.

Herkömmlich wird zur Wärmeabführung von einer rotierenden elektrischen Maschine ein Kühlgas in Form von Umgebungsluft, von Wasserstoff oder eines Wasserstoff enthaltenden Gemischs verwendet, welches zur Kühlung der rotierenden elektrischen Maschine durch ein Gehäuse der rotierenden elektrischen Maschine geleitet wird und innerhalb eines Kühlkreislaufs zirkuliert, wobei ein Abschnitt des Kühlkreislaufs durch das Gehäuse der rotierenden elektrischen Maschine gebildet wird. Das Ausmaß der Kühlung einer rotierenden elektrischen Maschine hängt insbesondere von der Wärmekapazität des jeweilig zur Kühlung verwendeten Kühlfluids und der Strömungsgeschwindigkeit des Kühlfluids durch das Gehäuse der rotierenden elektrischen Maschine ab. Das den Bauteilen einer rotierenden elektrischen Maschine zugeleitete Kühlfluid kann in seiner Temperatur schwanken, was mit einer schwankenden Kühleffektivität eines herkömmlichen Kühlsystems einhergeht.

Üblicherweise ist eine rotierende elektrische Maschine derart ausgelegt, dass ein sicherer und dauerhafter Betrieb der rotierenden elektrischen Maschine gewährleistet ist, wenn die rotierende elektrische Maschine eine Bemessungsleistung abgibt. Dies bedeutet, dass eine herkömmliche rotierende elektrische Maschine derart ausgelegt ist, dass im Betrieb einer solchen rotierenden elektrischen Maschine eventuell auftretende Maximalauslastungen und hierbei von der rotierenden elektrischen Maschine erzeugte Maximalleistungen höchstens der Bemessungsleistung entsprechen, diese jedoch nicht überschreiten.

Aufgabe der Erfindung ist es, die Kühlung einer rotierenden elektrischen Maschine zu verbessern und hierdurch die Leistung der rotierenden elektrischen Maschine zu steigern und deren Lebensdauer zu verlängern.

Nach dem erfindungsgemäßen Verfahren zum Betreiben eines einen geschlossenen Kühlkreislauf aufweisenden Kühlsystems zur Kühlung einer rotierenden elektrischen Maschine, insbesondere eines Generators, beispielsweise eines Turbogenerators, wobei in dem Kühlkreislauf ein Kühlgas zirkuliert ein Abschnitt des Kühlkreislaufs durch ein Gehäuse der rotierenden elektrischen Maschine gebildet wird, wird ein in dem Kühlgas herrschender Druck, eine Zusammensetzung des Kühlgases und/oder eine Temperatur des Kühlgases in Abhängigkeit von einer Temperatur eines von der rotierenden elektrischen Maschine abgeführten Warmgases, von einer Temperatur von zumindest einer Komponente der rotierenden elektrischen Maschine und/oder von einer jeweilig von der rotierenden elektrischen Maschine abgegebenen Leistung variiert.

Gemäß der Erfindung kann der Grad einer Kühlung einer rotierenden elektrischen Maschine in Abhängigkeit von der Temperatur des Warmgases, von der Temperatur der zumindest einen Komponente der rotierenden elektrischen Maschine und/oder von der jeweilig von der rotierenden elektrischen Maschine abgegebenen Leistung variiert werden. Insbesondere kann der Grad einer solchen Kühlung mit der Temperatur des Warmgases, der Temperatur der zumindest einen Komponente der rotierenden elektrischen Maschine bzw. der abgegebenen Leistung anwachsen und bei fallender Temperatur bzw. Leistung abfallen. Hierdurch werden die Bauteile einer rotierenden elektrischen Maschine effektiver gekühlt, so dass ein sicherer und dauerhafter Betrieb der rotierenden elektrischen Maschine sichergestellt ist, was wiederum die Lebensdauer einer erfindungsgemäß gekühlten rotierenden elektrischen Maschine verlängert und deren Leistung steigert.

Durch eine Variation des in dem Kühlgas herrschenden Drucks kann die Wärmekapazität des Kühlgases variiert werden. Je höher der Druck in dem Kühlgas ist, desto höher ist die Wärmekapazität des Kühlgases und desto mehr Wärme kann über das Kühlgas von der rotierenden elektrischen Maschine abgeführt werden. Folglich ist es von Vorteil, wenn der in dem Kühlgas herrschende Druck derart variiert wird, dass der Druck mit anwachsender Temperatur des Warmgases, mit anwachsender Temperatur der Komponente der rotierenden elektrischen Maschine bzw. mit anwachsender abgegebener Leistung anwächst. Zudem ist es von Vorteil, wenn der in dem Kühlgas herrschende Druck derart variiert wird, dass der Druck mit abfallender Temperatur des Warmgases, mit abfallender Temperatur der Komponente der rotierenden elektrischen Maschine bzw. mit abfallender abgegebener Leistung abfällt, wodurch im Betrieb einer rotierenden elektrischen Maschine auftretende Gasreibungsverluste reduziert werden können, was mit einer Erhöhung des Wirkungsgrads einer erfindungsgemäß gekühlten rotierenden elektrischen Maschine einhergeht.

Eine Variation der Zusammensetzung des Kühlgases ist insbesondere bei der Verwendung von Wasserstoff enthaltendem Kühlgas von Vorteil. Je größer der Anteil an Wasserstoff in dem Kühlgas ist, desto höher ist die Wärmekapazität des Kühlgases und desto mehr Wärme kann über das Kühlgas von der rotierenden elektrischen Maschine abgeführt werden. Folglich ist es von Vorteil, wenn der Anteil des Wasserstoffs in dem Kühlgas derart variiert wird, dass der Wasserstoffanteil mit anwachsender Temperatur des Warmgases, mit anwachsender Temperatur der Komponente der rotierenden elektrischen Maschine bzw. mit anwachsender abgegebener Leistung anwächst. Zudem ist es von Vorteil, wenn der Wasserstoffanteil in dem Kühlgas derart variiert wird, dass der Wasserstoffanteil mit abfallender Temperatur des Warmgases, mit abfallender Temperatur der Komponente der rotierenden elektrischen Maschine bzw. mit abfallender abgegebener Leistung abfällt. Durch eine Variation des Wasserstoffanteils kann bzw. eine hierdurch bewirkte Variation der Zusammensetzung des Kühlgases kann die Kühleffektivität an den jeweiligen Anwendungsfall optimal angepasst werden.

Durch eine Variation der Temperatur des Kühlgases kann die Kühleffektivität ebenfalls optimal an den jeweiligen Anwendungsfall angepasst werden. Je kleiner die Temperatur des einer rotierenden elektrischen Maschine zugeführten Kühlgases ist, desto mehr Wärme kann das Kühlgas von der rotierenden elektrischen Maschine abführen. Folglich ist es von Vorteil, wenn die Temperatur des einer rotierenden elektrischen Maschine zuzuführenden Kühlgases derart variiert wird, dass die Temperatur des Kühlgases mit anwachsender Temperatur des Warmgases, mit anwachsender Temperatur der Komponente der rotierenden elektrischen Maschine bzw. mit anwachsender abgegebener Leistung abfällt. Zudem ist es mit Hinblick auf den Energieverbrauch von Vorteil, wenn die Kühlgastemperatur derart variiert wird, dass die Kühlgastemperatur mit abfallender Temperatur des Warmgases, mit abfallender Temperatur der Komponente der rotierenden elektrischen Maschine bzw. mit abfallender abgegebener Leistung, beispielsweise auf Umgebungstemperatur, anwächst.

Im Rahmen der Erfindung sind die vorbeschriebenen Variationen des in dem Kühlgas herrschenden Drucks, der Zusammensetzung des Kühlgases und der Temperatur des Kühlgases einzeln oder in beliebiger Kombination miteinander realisierbar, wobei Letzteres bezüglich der Kühleffektivität mit Synergieeffekten einhergeht.

Zudem kann eine erfindungsgemäße Variationen des in dem Kühlgas herrschenden Drucks, der Zusammensetzung des Kühlgases und/oder der Temperatur des Kühlgases in Abhängigkeit von der Temperatur des Warmgases, von der Temperatur der zumindest einen Komponente der rotierenden elektrischen Maschine oder von der jeweilig von der rotierenden elektrischen Maschine abgegebenen Leistung oder einer beliebigen Kombination dieser Regelgrößen erfolgen. Als Temperatur der zumindest einen Komponente der rotierenden elektrischen Maschine kann beispielsweise eine Wickelkopftemperatur eines Wickelkopfes eines Ständers der rotierenden elektrischen Maschine erfasst werden.

Das Warmgas wird zum Erzeugen des Kühlgases bevorzugt durch einen Wärmetauscher des Kühlkreislaufs geführt, wobei der Wärmetauscher von einem Kühlfluid durchströmt wird, und wobei eine Stromstärke des Kühlfluids in dem Wärmetauscher in Abhängigkeit von der Temperatur des Warmgases, von der Temperatur der zumindest einen Komponente der rotierenden elektrischen Maschine und/oder von der jeweilig von der rotierenden elektrischen Maschine abgegebenen Leistung variiert wird. Das Kühlfluid, welches flüssig ausgebildet sein kann, kann aus einer Kühlwasserversorgung eines Kraftwerks stammen. Je größer die Stromstärke des Kühlfluids durch den Wärmetauscher ist, desto stärker kann das den Wärmetauscher durchströmende Kühlgas in dem Wärmetauscher gekühlt werden. Folglich wird die Stromstärke des Kühlfluids durch den Wärmetauscher vorzugsweise derart variiert, dass die Stromstärke mit anwachsender Temperatur des Warmgases, mit anwachsender Temperatur der Komponente der rotierenden elektrischen Maschine bzw. mit anwachsender abgegebener Leistung anwächst und mit abfallender Temperatur des Warmgases, mit abfallender Temperatur der Komponente der rotierenden elektrischen Maschine bzw. mit abfallender abgegebener Leistung abfällt. Alternativ oder zusätzlich kann auch die Stromstärke des den Wärmetauscher durchströmenden Kühlgases in dem Kühlkreislauf entsprechend variiert werden.

Als Temperatur der zumindest einen Komponente der rotierenden elektrischen Maschine wird bevorzugt an wenigstens einem Wickelkopf eines Ständers der rotierenden elektrischen Maschine eine Wickelkopftemperatur erfasst. Ein Wickelkopf einer rotierenden elektrischen Maschine ist im Betrieb einer rotierenden elektrischen Maschine besonders starken thermischen Belastungen ausgesetzt, weshalb eine besondere Berücksichtigung der Wickelkopftemperatur bei der Durchführung einer Kühlung einer rotierenden elektrischen Maschine vorteilhaft ist.

Bevorzugt wird an beiden Wickelköpfen des Ständers jeweils eine Wickelkopftemperatur erfasst, wobei aus den beiden erfassten Wickelkopftemperaturen ein Temperaturmittelwert gebildet wird, der für die Regelung verwendet wird. Hierdurch kann die Regelung unter Verwendung von redundanten Temperaturwerten erfolgen.

Die Zusammensetzung des Kühlgases wird bevorzugt dadurch variiert, dass dem Kühlgas in Abhängigkeit von der Temperatur des Warmgases, von der Temperatur der zumindest einen Komponente der rotierenden elektrischen Maschine und/oder von der jeweilig von der rotierenden elektrischen Maschine abgegebenen Leistung wenigstens eine Gaszusatzkomponente beigemengt wird. Durch die Beimengung der Gaszusatzkomponente wird der Anteil einer in dem Kühlgas vorhandenen Kühlgaskomponente, beispielsweise Wasserstoff, verringert.

Bevorzugt wird als Gaszusatzkomponente Argon verwendet. Argon wird auch als zur Spülung eingesetzt, so dass durch die Verwendung von Argon zusätzlich ein gewünschtes Maß an Reinheit des Kühlgases nach einem Regelungsvorgang gewährleistet ist.

Die erfindungsgemäße Anordnung zum Variieren eines in einem in einem geschlossenen Kühlkreislauf eines Kühlsystems zur Kühlung einer rotierenden elektrischen Maschine, insbesondere eines Generators, zirkulierenden Kühlgas herrschenden Drucks, wobei ein Abschnitt des Kühlkreislaufs durch ein Gehäuse der rotierenden elektrischen Maschine gebildet ist, umfasst
- wenigstens eine fluidleitend mit dem Kühlkreislauf verbindbare Druckvariationseinrichtung zum Variieren des in dem Kühlgas herrschenden Drucks,
- zumindest eine Erfassungseinrichtung zum Erfassen von einer Temperatur eines von der rotierenden elektrischen Maschine abgeführten Warmgases, von einer Temperatur von zumindest einer Komponente der rotierenden elektrischen Maschine und/oder von einer jeweilig von der rotierenden elektrischen Maschine abgegebenen Leistung sowie
- eine kommunikationstechnisch mit der Druckvariationseinrichtung und der Erfassungseinrichtung verbundene elektronische Auswertungseinrichtung, wobei die Auswertungseinrichtung eingerichtet ist, den in dem Kühlgas herrschenden Druck in Abhängigkeit von der Temperatur des Warmgases, von der Temperatur der zumindest einen Komponente der rotierenden elektrischen Maschine und/oder von der jeweilig von der rotierenden elektrischen Maschine abgegebenen Leistung zu variieren.

Mit dieser Anordnung kann der in dem Kühlgas herrschende Druck und hierdurch die Wärmekapazität des Kühlgases variiert werden, um die Anordnung optimal an den jeweiligen Anwendungsfall anpassen zu können. Hiermit sind die oben mit Bezug auf das Verfahren genannten Vorteile entsprechend verbunden.

Die Erfassungseinrichtung zum Erfassen der Temperatur des Warmgases, der Temperatur der zumindest einen Komponente der rotierenden elektrischen Maschine und/oder von der jeweilig von der rotierenden elektrischen Maschine abgegebenen Leistung kann einen oder mehrere Sensoren aufweisen, welche an geeigneten Abschnitten einer rotierenden elektrischen Maschine angeordnet werden können.

Die Druckvariationseinrichtung ist bevorzugt fluidleitend mit dem Gehäuse der rotierenden elektrischen Maschine verbindbar. Diese Verbindung zwischen der Druckvariationseinrichtung und dem Kühlkreislauf ist einfacher realisierbar als eine Verbindung zwischen der Druckvariationseinrichtung und einer Leitung des Kühlkreislaufs.

Bevorzugt weist die Druckvariationseinrichtung eine Druckerzeugungseinrichtung und eine Druckkammer mit zwei über eine flexible Membran fluiddicht voneinander getrennte Unterkammern auf, wobei eine Unterkammer ein Kühlgasreservoir ausbildet und fluidleitend mit dem Kühlkreislauf verbindbar ist, wobei die andere Unterkammer fluidleitend mit der Druckerzeugungseinrichtung verbunden ist, und wobei mittels die Druckerzeugungseinrichtung ein Druckfluid in Abhängigkeit von der Temperatur des Warmgases, von der Temperatur der zumindest einen Komponente der rotierenden elektrischen Maschine und/oder von der jeweilig von der rotierenden elektrischen Maschine abgegebenen Leistung in die fluidleitend mit der Druckerzeugungseinrichtung verbundene Unterkammer einleitbar und aus dieser Unterkammer ablassbar ist. Diese Ausgestaltung der Anordnung ist relativ einfach konstruktiv zu realisieren. Die die Unterkammern fluiddicht voneinander trennende Membran kann aus einem Elastomer gebildet sein.

Die erfindungsgemäße Anordnung zum Variieren einer Zusammensetzung eines in einem geschlossenen Kühlkreislauf eines Kühlsystems zur Kühlung einer rotierenden elektrischen Maschine, insbesondere eines Generators, zirkulierenden Kühlgases, wobei ein Abschnitt des Kühlkreislaufs durch ein Gehäuse der rotierenden elektrischen Maschine gebildet ist, umfasst
- wenigstens eine fluidleitend mit dem Kühlkreislauf verbundene Zusammensetzungsvariationseinrichtung zum Variieren einer Zusammensetzung des Kühlgases,
- zumindest eine Erfassungseinrichtung zum Erfassen von einer Temperatur eines von der rotierenden elektrischen Maschine abgeführten Warmgases, von einer Temperatur von zumindest einer Komponente der rotierenden elektrischen Maschine und/oder von einer jeweilig von der rotierenden elektrischen Maschine abgegebenen Leistung sowie
- eine kommunikationstechnisch mit der Zusammensetzungsvariationseinrichtung und der Erfassungseinrichtung verbundene elektronische Auswertungseinrichtung, wobei die Auswertungseinrichtung eingerichtet ist, die Zusammensetzung des Kühlgases in Abhängigkeit von der Temperatur des Warmgases, von der Temperatur der zumindest einen Komponente der rotierenden elektrischen Maschine und/oder von der jeweilig von der rotierenden elektrischen Maschine abgegebenen Leistung zu variieren.

Mit dieser Anordnung kann die Zusammensetzung des Kühlgases und hierdurch die Wärmekapazität des Kühlgases variiert werden, um die Anordnung optimal an den jeweiligen Anwendungsfall anpassen zu können. Hiermit sind die oben mit Bezug auf das Verfahren genannten Vorteile entsprechend verbunden.

Die Zusammensetzungsvariationseinrichtung weist bevorzugt wenigstens eine Beimengungseinrichtung zum Beimengen von zumindest einer Gaszusatzkomponente zu dem Kühlgas in Abhängigkeit von der Temperatur des Warmgases, von der Temperatur der zumindest einen Komponente der rotierenden elektrischen Maschine und/oder von der jeweilig von der rotierenden elektrischen Maschine abgegebenen Leistung auf.

Bevorzugt ist die Beimengungseinrichtung eingerichtet, dem Kühlgas als Gaszusatzkomponente Argon beizumengen.

Die erfindungsgemäße Anordnung zum Variieren einer Temperatur eines in einem geschlossenen Kühlkreislauf eines Kühlsystems zur Kühlung einer rotierenden elektrischen Maschine, insbesondere eines Generators, zirkulierenden Kühlgases, wobei ein Abschnitt des Kühlkreislaufs durch ein Gehäuse der rotierenden elektrischen Maschine gebildet ist, wobei der Kühlkreislauf wenigstens einen Wärmetauscher umfasst, umfasst
- wenigstens eine Kühlfluidzuführung zum Zuführen eines Kühlfluidstroms zu dem Wärmetauscher, wobei die Kühlfluidzuführung eingerichtet ist, die Stromstärke des Fluidstroms zu variieren,
- zumindest eine Erfassungseinrichtung zum Erfassen von einer Temperatur eines von der rotierenden elektrischen Maschine abgeführten Warmgases, von einer Temperatur von zumindest einer Komponente der rotierenden elektrischen Maschine und/oder von einer jeweilig von der rotierenden elektrischen Maschine abgegebenen Leistung sowie
- eine kommunikationstechnisch mit der Kühlfluidzuführung und der Erfassungseinrichtung verbundene elektronische Auswertungseinrichtung, wobei die Auswertungseinrichtung eingerichtet ist, die Temperatur des Kühlgases in Abhängigkeit von der Temperatur des Warmgases, von der Temperatur der zumindest einen Komponente der rotierenden elektrischen Maschine und/oder von der jeweilig von der rotierenden elektrischen Maschine abgegebenen Leistung zu variieren.

Mit dieser Anordnung kann die Temperatur des der rotierenden elektrischen Maschine zuzuführenden Kühlgases variiert werden, um die Anordnung optimal an den jeweiligen Anwendungsfall anpassen zu können. Hiermit sind die oben mit Bezug auf das Verfahren genannten Vorteile entsprechend verbunden.

Die Erfassungseinrichtung ist bevorzugt zum Erfassen der Wickelkopftemperatur von wenigstens einem Wickelkopf eines Ständers der rotierenden elektrischen Maschine eingerichtet.

Bevorzugt ist die Erfassungseinrichtung zum Erfassen von Wickelkopftemperaturen an beiden Wickelköpfen des Ständers eingerichtet, wobei die Auswertungseinrichtung eingerichtet ist, aus den beiden erfassten Wickelkopftemperaturen ein Temperaturmittelwert zu bilden, der für die Regelung verwendet wird.

Die Kühlfluidzuführung weist bevorzugt wenigstens eine elektrisch ansteuerbare Ventileinheit auf, welche kommunikationstechnisch mit der Auswertungseinrichtung verbunden ist und mit der eine Stromstärke des dem Wärmetauscher zuführbaren Fluidstroms variierbar ist. Die Ventileinheit kann beispielsweise ein Stromregelventil und einen Aktuator, beispielsweise einen elektrisch ansteuerbaren Motor, aufweisen, wobei das Stromregelventil mittels des Aktuators betätigbar ist.

Das erfindungsgemäße System zum Kühlen einer rotierenden elektrischen Maschine, insbesondere eines Generators, umfasst einen geschlossenen Kühlkreislauf, von dem ein Abschnitt durch ein Gehäuse der rotierenden elektrischen Maschine gebildet ist, ein in dem Kühlkreislauf zirkulierendes Kühlgas und wenigstens eine Anordnung gemäß einer der vorgenannten Ausgestaltungen oder einer beliebigen Kombination derselben. Hiermit sind die oben mit Bezug auf die Anordnung bzw. das Verfahren genannten Vorteile entsprechend verbunden.

Das erfindungsgemäße System zum Kühlen einer rotierenden elektrischen Maschine, insbesondere eines Generators, umfasst einen geschlossenen Kühlkreislauf, von dem ein Abschnitt durch ein Gehäuse der rotierenden elektrischen Maschine gebildet ist, und ein in dem Kühlkreislauf zirkulierendes Kühlgas, wobei das System zur Durchführung des Verfahrens gemäß einer der oben genannten Ausgestaltungen oder einer beliebigen Kombination derselben eingerichtet ist. Hiermit sind die oben mit Bezug auf das Verfahren genannten Vorteile entsprechend verbunden.

Im Folgenden werden bevorzugte Ausführungsformen des erfindungsgemäßen Systems und der erfindungsgemäßen Anordnung anhand der beigefügten schematischen Zeichnungen erläutert.

Es zeigen:
- Fig. 1: eine Darstellung eines Ausführungsbeispiels für ein erfindungsgemäßes System,
- Fig. 2: eine Darstellung eines weiteren Ausführungsbeispiels für ein erfindungsgemäßes System, und
- Fig. 3: eine Darstellung eines weiteren Ausführungsbeispiels für ein erfindungsgemäßes System.

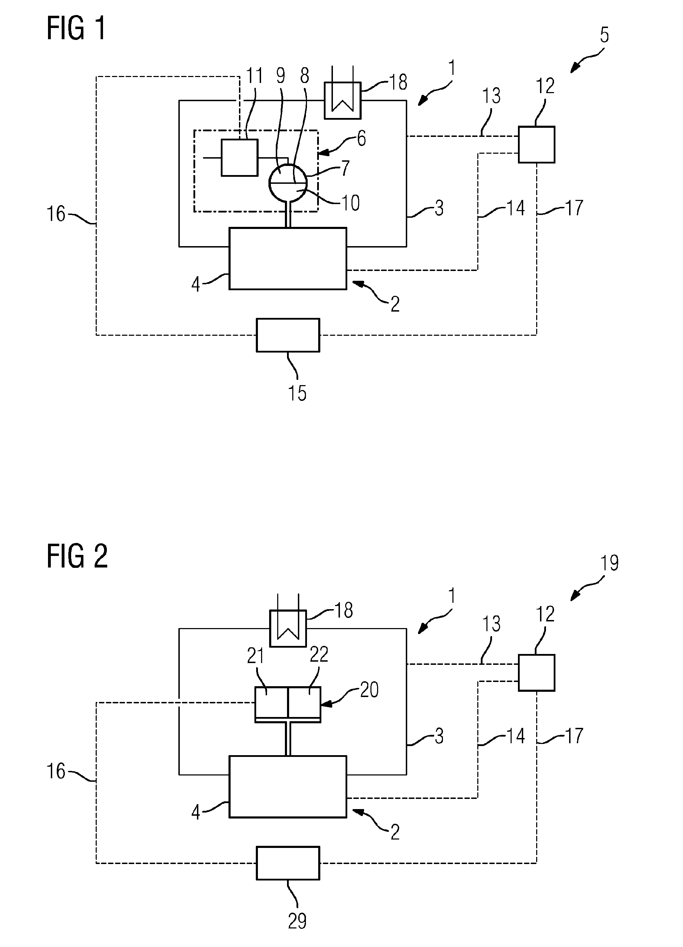

Figur 1 zeigt eine Darstellung eines Ausführungsbeispiels für ein erfindungsgemäßes System 1 zum Kühlen einer rotierenden elektrischen Maschine 2 in Form eines Generators. Das System 1 umfasst einen einen Wärmetauscher 18 aufweisenden, geschlossenen Kühlkreislauf 3, von dem ein Abschnitt durch ein Gehäuse 4 der rotierenden elektrischen Maschine 2 gebildet ist, ein in dem Kühlkreislauf 3 zirkulierendes Kühlgas und wenigstens eine Anordnung 5 zum Variieren des in dem Kühlgas herrschenden Drucks.

Die Anordnung 5 umfasst eine fluidleitend mit dem Kühlkreislauf 3 verbundene Druckvariationseinrichtung 6 zum Variieren des in dem Kühlgas herrschenden Drucks. Die Druckvariationseinrichtung 6 weist eine Druckkammer 7 mit zwei über eine flexible Membran 8 fluiddicht voneinander getrennten Unterkammern 9 und 10 auf. Die Unterkammer 10 bildet ein Kühlgasreservoir für ein Wasserstoff enthaltendes Kühlgas aus und ist fluidleitend mit dem Kühlkreislauf 3 bzw. dem Gehäuse 4 der rotierenden elektrischen Maschine 2 verbunden, wodurch die Druckvariationseinrichtung 6 selbst fluidleitend mit dem Gehäuse 4 der rotierenden elektrischen Maschine 2 bzw. dem Kühlkreislauf 3 verbunden ist. Die Druckvariationseinrichtung 6 umfasst ferner eine Druckerzeugungseinrichtung 11, wobei die Unterkammer 9 der Druckkammer 7 fluidleitend mit der Druckerzeugungseinrichtung 11 verbunden ist. Die Druckerzeugungseinrichtung 11 kann ein regelbares, nicht näher dargestelltes Ventil aufweisen, über das Luft als Druckfluid in die Unterkammer 9 einleitbar bzw. aus dieser Unterkammer 9 ableitbar ist.

Die Anordnung 5 umfasst des Weiteren eine Erfassungseinrichtung 12 zum Erfassen von einer Temperatur eines von der rotierenden elektrischen Maschine 2 abgeführten Warmgases, von einer Temperatur von zumindest einer Komponente der rotierenden elektrischen Maschine 2 und/oder von einer jeweilig von der rotierenden elektrischen Maschine 2 abgegebenen Leistung. Hierzu ist die Erfassungseinrichtung 12 über nicht gezeigte Messsensoren mit dem Kühlkreislauf 3 bzw. der rotierenden elektrischen Maschine 2 verbunden, was durch die durch gestrichelte Linien angedeuteten Kommunikationsverbindungen 13 bzw. 14 angedeutet sein soll.

Die Anordnung 5 umfasst ferner eine kommunikationstechnisch mit der Druckerzeugungseinrichtung 11 und der Erfassungseinrichtung 12 verbundene elektronische Auswertungseinrichtung 15, was durch die durch gestrichelte Linien angedeuteten Kommunikationsverbindungen 16 bzw. 17 angedeutet sein soll. Die Auswertungseinrichtung 15 ist eingerichtet, den in dem Kühlgas herrschenden Druck in Abhängigkeit von der Temperatur des Warmgases, von der Temperatur der zumindest einen Komponente der rotierenden elektrischen Maschine 2 und/oder von der jeweilig von der rotierenden elektrischen Maschine 2 abgegebenen Leistung zu variieren. Hierzu wird die Druckerzeugungseinrichtung 11 derart von der Auswertungseinrichtung 15 angesteuert, dass mittels der Druckerzeugungseinrichtung 11 ein Druckfluid in Abhängigkeit von der Temperatur des Warmgases, von der Temperatur der zumindest einen Komponente der rotierenden elektrischen Maschine 2 und/oder von der jeweilig von der rotierenden elektrischen Maschine 2 abgegebenen Leistung in die fluidleitend mit der Druckerzeugungseinrichtung 11 verbundene Unterkammer 9 einleitbar und aus dieser Unterkammer 9 ablassbar.

Figur 2 zeigt eine Darstellung eines weiteren Ausführungsbeispiels für ein erfindungsgemäßes System 1 zum Kühlen einer rotierenden elektrischen Maschine 2 in Form eines Generators. Das System 1 umfasst einen einen Wärmetauscher 18 aufweisenden, geschlossenen Kühlkreislauf 3, von dem ein Abschnitt durch ein Gehäuse 4 der rotierenden elektrischen Maschine 2 gebildet ist, ein in dem Kühlkreislauf 3 zirkulierendes Kühlgas und wenigstens eine Anordnung 19 zum Variieren einer Zusammensetzung des Kühlgases.

Die Anordnung 19 umfasst eine entsprechend dem in Figur 1 gezeigten Ausführungsbeispiel ausgebildete Erfassungseinrichtung 12, weshalb diesbezüglich auf die obigen Ausführungen zu Figur 1 Bezug genommen wird.

Im Unterschied zu der in Figur 1 gezeigten Anordnung 5 umfasst die Anordnung 19 statt einer Druckvariationseinrichtung 6 eine fluidleitend mit dem Kühlkreislauf 3 verbundene Zusammensetzungsvariationseinrichtung 20 zum Variieren der Zusammensetzung des Kühlgases. Die Zusammensetzungsvariationseinrichtung 20 weist eine Beimengungseinrichtung 21 zum Beimengen von zumindest einer Gaszusatzkomponente zu dem Kühlgas in Abhängigkeit von der Temperatur des Warmgases, von der Temperatur der zumindest einen Komponente der rotierenden elektrischen Maschine 2 und/oder von der jeweilig von der rotierenden elektrischen Maschine 2 abgegebenen Leistung auf. Die Beimengungseinrichtung 21 ist eingerichtet, dem Kühlgas als Gaszusatzkomponente Argon beizumengen. Die Zusammensetzungsvariationseinrichtung 20 weist zudem eine Einrichtung 22 zum Abgeben von Wasserstoff enthaltendem Kühlgas.

Ferner umfasst die Anordnung 19 eine kommunikationstechnisch mit der Zusammensetzungsvariationseinrichtung 20 und der Erfassungseinrichtung 12 verbundene elektronische Auswertungseinrichtung 29. Die Auswertungseinrichtung 29 ist eingerichtet, die Zusammensetzung des Kühlgases in Abhängigkeit von der Temperatur des Warmgases, von der Temperatur der zumindest einen Komponente der rotierenden elektrischen Maschine 2 und/oder von der jeweilig von der rotierenden elektrischen Maschine 2 abgegebenen Leistung zu variieren, insbesondere indem die dem Kühlgas zugeführte Menge an Argon variiert wird.

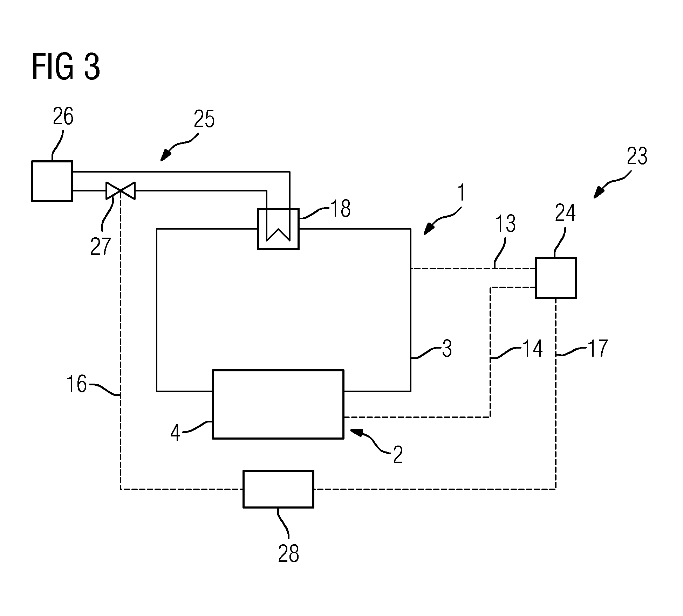

Figur 3 zeigt eine Darstellung eines weiteren Ausführungsbeispiels für ein erfindungsgemäßes System 1 zum Kühlen einer rotierenden elektrischen Maschine 2 in Form eines Generators. Das System 1 umfasst einen einen Wärmetauscher 18 aufweisenden, geschlossenen Kühlkreislauf 3, von dem ein Abschnitt durch ein Gehäuse 4 der rotierenden elektrischen Maschine 2 gebildet ist, ein in dem Kühlkreislauf 3 zirkulierendes Kühlgas und wenigstens eine Anordnung 23 zum Variieren einer Temperatur des Kühlgases.

Die Anordnung 23 umfasst eine Erfassungseinrichtung 24 zum Erfassen der Temperatur des von der rotierenden elektrischen Maschine 2 abgeführten Warmgases und/oder von Wickelkopftemperaturen an beiden Wickelköpfen eines nicht gezeigten Ständers der rotierenden elektrischen Maschine 2. Hierzu ist die Erfassungseinrichtung 23 über nicht gezeigte Messsensoren mit dem Kühlkreislauf 3 bzw. der rotierenden elektrischen Maschine 2 verbunden, was durch die durch gestrichelte Linien angedeuteten Kommunikationsverbindungen 13 bzw. 14 angedeutet sein soll.

Die Anordnung 23 umfasst des Weiteren eine Kühlfluidzuführung 25 zum Zuführen eines Kühlfluidstroms zu dem Wärmetauscher 18. Die Kühlfluidzuführung 25 ist mit einer Kühlwasserversorgung 26 eines nicht gezeigten Kraftwerks verbunden. Die Kühlfluidzuführung 25 ist eingerichtet, die Stromstärke des Fluidstroms zu variieren, wobei die Kühlfluidzuführung 25 eine elektrisch ansteuerbare Ventileinheit 27 aufweist, mit der eine Stromstärke des dem Wärmetauscher 18 zuführbaren Fluidstroms variierbar ist.

Die Anordnung 23 umfasst ferner eine kommunikationstechnisch mit der Kühlfluidzuführung 25 und der Erfassungseinrichtung 24 verbundene elektronische Auswertungseinrichtung 28. Die Auswertungseinrichtung 28 ist eingerichtet, die Temperatur des Kühlgases in Abhängigkeit von der Temperatur des Warmgases, von der Temperatur der zumindest einen Komponente der rotierenden elektrischen Maschine 2 und/oder von der jeweilig von der rotierenden elektrischen Maschine 2 abgegebenen Leistung zu variieren, wozu die Ventileinheit 27 kommunikationstechnisch mit der Auswertungseinrichtung 28 verbunden ist. Zudem ist die Auswertungseinrichtung 28 eingerichtet, aus den beiden mittels der Erfassungseinrichtung 24 erfassten Wickelkopftemperaturen ein Temperaturmittelwert zu bilden, der für die Regelung verwendet wird.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben eines einen geschlossenen Kühlkreislauf (3) aufweisenden Kühlsystems (1) zur Kühlung einer rotierenden elektrischen Maschine (2), insbesondere eines Generators,
wobei in dem Kühlkreislauf (3) ein Kühlgas zirkuliert, wobei ein Abschnitt des Kühlkreislaufs (3) durch ein Gehäuse (4) der rotierenden elektrischen Maschine (2) gebildet wird, und
wobei ein in dem Kühlgas herrschender Druck, eine Zusammensetzung des Kühlgases und/oder eine Temperatur des Kühlgases in Abhängigkeit von einer Temperatur eines von der rotierenden elektrischen Maschine (2) abgeführten Warmgases, von einer Temperatur von zumindest einer Komponente der rotierenden elektrischen Maschine (2) und/oder von einer jeweilig von der rotierenden elektrischen Maschine (2) abgegebenen Leistung variiert wird.

2. Verfahren gemäß Anspruch 1,
wobei das Warmgas zum Erzeugen des Kühlgases durch einen Wärmetauscher (18) des Kühlkreislaufs geführt wird, wobei der Wärmetauscher (18) von einem Kühlfluid durchströmt wird, und
wobei eine Stromstärke der Kühlflüssigkeit in dem Wärmetauscher (18) in Abhängigkeit von der Temperatur des Warmgases, von der Temperatur der zumindest einen Komponente der rotierenden elektrischen Maschine (2) und/oder von der jeweilig von der rotierenden elektrischen Maschine (2) abgegebenen Leistung variiert wird.

3. Verfahren gemäß Anspruch 1 oder 2,
wobei als Temperatur der zumindest einen Komponente der rotierenden elektrischen Maschine (2) an wenigstens einem Wickelkopf eines Ständers der rotierenden elektrischen Maschine (2) eine Wickelkopftemperatur erfasst wird.

4. Verfahren gemäß Anspruch 3,
wobei an beiden Wickelköpfen des Ständers jeweils eine Wickelkopftemperatur erfasst wird, und
wobei aus den beiden erfassten Wickelkopftemperaturen ein Temperaturmittelwert gebildet wird, der für die Regelung verwendet wird.

5. Verfahren gemäß einem der Ansprüche 1 bis 4,
wobei die Zusammensetzung des Kühlgases dadurch variiert wird, dass dem Kühlgas in Abhängigkeit von der Temperatur des Warmgases, von der Temperatur der zumindest einen Komponente der rotierenden elektrischen Maschine (2) und/oder von der jeweilig von der rotierenden elektrischen Maschine (2) abgegebenen Leistung wenigstens eine Gaszusatzkomponente beigemengt wird.

6. Verfahren gemäß Anspruch 5,
wobei als Gaszusatzkomponente Argon verwendet wird.

7. Anordnung (5) zum Variieren eines in einem in einem geschlossenen Kühlkreislauf (3) eines Kühlsystems (1) zur Kühlung einer rotierenden elektrischen Maschine (2), insbesondere eines Generators, zirkulierenden Kühlgas herrschenden Drucks,
wobei ein Abschnitt des Kühlkreislaufs (3) durch ein Gehäuse (4) der rotierenden elektrischen Maschine (2) gebildet ist, aufweisend
- wenigstens eine fluidleitend mit dem Kühlkreislauf (3) verbindbare Druckvariationseinrichtung (6) zum Variieren des in dem Kühlgas herrschenden Drucks,
- zumindest eine Erfassungseinrichtung (12) zum Erfassen von einer Temperatur eines von der rotierenden elektrischen Maschine (2) abgeführten Warmgases, von einer Temperatur von zumindest einer Komponente der rotierenden elektrischen Maschine (2) und/oder von einer jeweilig von der rotierenden elektrischen Maschine (2) abgegebenen Leistung sowie
- eine kommunikationstechnisch mit der Druckvariationseinrichtung (6) und der Erfassungseinrichtung (12) verbundene elektronische Auswertungseinrichtung (15),
wobei die Auswertungseinrichtung (15) eingerichtet ist, den in dem Kühlgas herrschenden Druck in Abhängigkeit von der Temperatur des Warmgases, von der Temperatur der zumindest einen Komponente der rotierenden elektrischen Maschine (2) und/oder von der jeweilig von der rotierenden elektrischen Maschine (2) abgegebenen Leistung zu variieren.

8. Anordnung (5) gemäß Anspruch 7,
wobei die Druckvariationseinrichtung (6) fluidleitend mit dem Gehäuse (4) der rotierenden elektrischen Maschine (2) verbindbar ist.

9. Anordnung (5) gemäß Anspruch 7 oder 8,
wobei die Druckvariationseinrichtung (6) eine Druckerzeugungseinrichtung (11) und eine Druckkammer (7) mit zwei über eine flexible Membran (8) fluiddicht voneinander getrennten Unterkammern (9, 10) aufweist,
wobei eine Unterkammer (10) ein Kühlgasreservoir ausbildet und fluidleitend mit dem Kühlkreislauf (3) verbindbar ist, wobei die andere Unterkammer (9) fluidleitend mit der Druckerzeugungseinrichtung (11) verbunden ist, und
wobei mittels die Druckerzeugungseinrichtung (11) ein Druckfluid in Abhängigkeit von der Temperatur des Warmgases, von der Temperatur der zumindest einen Komponente der rotierenden elektrischen Maschine (2) und/oder von der jeweilig von der rotierenden elektrischen Maschine (2) abgegebenen Leistung in die fluidleitend mit der Druckerzeugungseinrichtung (11) verbundene Unterkammer (9) einleitbar und aus dieser Unterkammer (9) ablassbar ist.

10. Anordnung (19) zum Variieren einer Zusammensetzung eines in einem geschlossenen Kühlkreislauf (3) eines Kühlsystems (1) zur Kühlung einer rotierenden elektrischen Maschine (2), insbesondere eines Generators, zirkulierenden Kühlgases,
wobei ein Abschnitt des Kühlkreislaufs (3) durch ein Gehäuse (4) der rotierenden elektrischen Maschine (2) gebildet ist, aufweisend
- wenigstens eine fluidleitend mit dem Kühlkreislauf (3) verbundene Zusammensetzungsvariationseinrichtung (20) zum Variieren einer Zusammensetzung des Kühlgases,
- zumindest eine Erfassungseinrichtung (12) zum Erfassen von einer Temperatur eines von der rotierenden elektrischen Maschine (2) abgeführten Warmgases, von einer Temperatur von zumindest einer Komponente der rotierenden elektrischen Maschine (2) und/oder von einer jeweilig von der rotierenden elektrischen Maschine (2) abgegebenen Leistung sowie
- eine kommunikationstechnisch mit der Zusammensetzungsvariationseinrichtung (20) und der Erfassungseinrichtung (12) verbundene elektronische Auswertungseinrichtung (29), wobei die Auswertungseinrichtung (29) eingerichtet ist, die Zusammensetzung des Kühlgases in Abhängigkeit von der Temperatur des Warmgases, von der Temperatur der zumindest einen Komponente der rotierenden elektrischen Maschine (2) und/oder von der jeweilig von der rotierenden elektrischen Maschine (2) abgegebenen Leistung zu variieren.

11. Anordnung (19) gemäß Anspruch 10,
wobei die Zusammensetzungsvariationseinrichtung (20) wenigstens eine Beimengungseinrichtung (21) zum Beimengen von zumindest einer Gaszusatzkomponente zu dem Kühlgas in Abhängigkeit von der Temperatur des Warmgases, von der Temperatur der zumindest einen Komponente der rotierenden elektrischen Maschine (2) und/oder von der jeweilig von der rotierenden elektrischen Maschine (2) abgegebenen Leistung aufweist.

12. Anordnung (19) gemäß Anspruch 11,
wobei die Beimengungseinrichtung (21) eingerichtet ist, dem Kühlgas als Gaszusatzkomponente Argon beizumengen.

13. Anordnung (23) zum Variieren einer Temperatur eines in einem geschlossenen Kühlkreislauf (3) eines Kühlsystems (1) zur Kühlung einer rotierenden elektrischen Maschine (2), insbesondere eines Generators, zirkulierenden Kühlgases, wobei ein Abschnitt des Kühlkreislaufs (3) durch ein Gehäuse (4) der rotierenden elektrischen Maschine (2) gebildet ist,
wobei der Kühlkreislauf (3) wenigstens einen Wärmetauscher (18) umfasst, aufweisend
- wenigstens eine Kühlfluidzuführung (25) zum Zuführen eines Kühlfluidstroms zu dem Wärmetauscher (18), wobei die Kühlfluidzuführung (25) eingerichtet ist, die Stromstärke des Fluidstroms zu variieren,
- zumindest eine Erfassungseinrichtung (24) zum Erfassen von einer Temperatur eines von der rotierenden elektrischen Maschine (2) abgeführten Warmgases, von einer Temperatur von zumindest einer Komponente der rotierenden elektrischen Maschine (2) und/oder von einer jeweilig von der rotierenden elektrischen Maschine (2) abgegebenen Leistung sowie
- eine kommunikationstechnisch mit der Kühlfluidzuführung (25) und der Erfassungseinrichtung (24) verbundene elektronische Auswertungseinrichtung (28),
wobei die Auswertungseinrichtung (28) eingerichtet ist, die Temperatur des Kühlgases in Abhängigkeit von der Temperatur des Warmgases, von der Temperatur der zumindest einen Komponente der rotierenden elektrischen Maschine (2) und/oder von der jeweilig von der rotierenden elektrischen Maschine (2) abgegebenen Leistung zu variieren.

14. Anordnung (23) gemäß Anspruch 13,
wobei die Erfassungseinrichtung (24) zum Erfassen der Wickelkopftemperatur von wenigstens einem Wickelkopf eines Ständers der rotierenden elektrischen Maschine (2) eingerichtet ist.

15. Anordnung (23) gemäß Anspruch 14,
wobei die Erfassungseinrichtung (24) zum Erfassen von Wickelkopftemperaturen an beiden Wickelköpfen des Ständers eingerichtet ist, und
wobei die Auswertungseinrichtung (28) eingerichtet ist, aus den beiden erfassten Wickelkopftemperaturen ein Temperaturmittelwert zu bilden, der für die Regelung verwendet wird.

16. Anordnung (23) gemäß einem der Ansprüche 13 bis 15, wobei die Kühlfluidzuführung (25) wenigstens eine elektrisch ansteuerbare Ventileinheit (27) aufweist, welche kommunikationstechnisch mit der Auswertungseinrichtung (28) verbunden ist und mit der eine Stromstärke des dem Wärmetauscher (18) zuführbaren Fluidstroms variierbar ist.

17. System (1) zum Kühlen einer rotierenden elektrischen Maschine (2), insbesondere eines Generators,
aufweisend einen geschlossenen Kühlkreislauf (3), von dem ein Abschnitt durch ein Gehäuse (4) der rotierenden elektrischen Maschine (2) gebildet ist, ein in dem Kühlkreislauf zirkulierendes Kühlgas und wenigstens eine Anordnung (5, 19, 23) gemäß einem der Ansprüche 7 bis 16.

18. System (1) zum Kühlen einer rotierenden elektrischen Maschine (2), insbesondere eines Generators,
aufweisend einen geschlossenen Kühlkreislauf (3), von dem ein Abschnitt durch ein Gehäuse (4) der rotierenden elektrischen Maschine (2) gebildet ist, und ein in dem Kühlkreislauf (3) zirkulierendes Kühlgas,
wobei das System (1) zur Durchführung des Verfahrens gemäß einem der Ansprüche 1 bis 6 eingerichtet ist.
